# EUROPÄISCHE PATENTSCHRIFT

(11) **EP 1 465 205 B1**
(45) Veröffentlichungstag und Bekanntmachung des Hinweises auf die Patenterteilung: **09.07.2008**
(21) Anmeldenummer: 04007612.7
(22) Anmeldetag: 30.03.2004
(51) Int. Cl.: G21B 1/00

(54) **Verbundbauteil für Fusionsreaktor**
Joining piece for fusion reactor
Pièce de liaison pour réacteur de fusion

(30) Priorität: 02.04.2003 AT 2282003 U
(43) Veröffentlichungstag der Anmeldung: 06.10.2004
(73) Patentinhaber: PLANSEE SE, 6600 Reutte (AT)
(72) Erfinder: Schedler, Bertram, 6600 Reutte (AT); Schedle, Dietmar, 6600 Reutte (AT); Granzer, Thomas, 87490 Haldenwang (DE); Zabernig, Anton, 6600 Reutte (AT); Huber, Thomas, 6600 Lechaschau (AT); Friedrich, Thomas, 87642 Halblech (DE); Schreiber, Karlheinz, 6600 Breitenwang (AT); Friedle, Hans-Dieter, 6651 Häselgehr (AT)

(56) Entgegenhaltungen:
- JP-A- 5 256 968
- US-A- 4 690 793
- US-A- 5 988 488
- PIZZUTO A ET AL: "THE OUTLINE DESIGN OF THE ITER DIVERTOR OUTBOARD VERTICAL TARGET DUMP PLATE AND WING" PROCEEDINGS OF THE SYMPOSIUM ON FUSION TECHNOLOGY, XX, XX, Bd. 1, 1997, Seiten 291-294, XP008072224

## Beschreibung

Die Erfindung betrifft ein thermisch hochbelastbares Verbundbauteil für einen Fusionsreaktor, das zumindest aus einem dem Plasma zugewandten Bereich aus Wolfram oder einer Wolframlegierung mit einem W-Gehalt > 90 Gew.%, einem zur Wärmeableitung dienenden Bereich aus Kupfer oder einer Kupferlegierung mit einer Wärmeleitfähigkeit > 250 W/mK und einer mittleren Korngröße von > 100 µm und einem dazwischenliegenden Bereich aus einem Refraktärmetall-Kupfer-Verbundwerkstoff besteht.

Für den stationären Betrieb von Fusionsanlagen werden im Bereich der Oberfläche von Erste-Wand-Komponeriten, die auch als PFC's (Plasma Facing Components) bezeichnet werden, Leistungsflüsse von bis zu 10 MW/m² erwartet. Im Falle von Plasmazusammenbrüchen können innerhalb von wenigen Millisekunden an exponierten Stellen ca. 20 GJ freigesetzt werden. Die Entwicklung von PFC's speziell für die Bereiche höchster Energiedichten, wie beispielsweise den Divertor-, Baffel- und Limiterbereich stellt ein Schlüsselelement bei der technologischen Umsetzung der Fusionsforschung dar.

Die Werkstoffanforderungen für PFC-Komponenten sind vielfältig und zum Teil gegensätzlich. Neben physikalischen und mechanischen Eigenschaften wie hohe Wärmeleitfähigkeit, hoher Schmelzpunkt, niedriger Dampfdruck, gute Thermoschockbeständigkeit und Bearbeitbarkeit kommen noch für die Kernfusion spezifische Anforderungen wie geringe Aktivierung und Transmutation unter hohem Neutronenfluss, niedrige, permanente Tritiumspeicherung, geringe Erosion durch Plasmaionen und Neutralteilchen, geringe Sputterrate und Erosion durch örtliche Effekte wie Lichtbogen und Hotspots sowie geringe Abkühlung des Kernplasmas durch charakteristische Strahlung.

In Abhängigkeit von den Beanspruchungsbedingungen sind die favorisierten Werkstoffe für PFC's, Beryllium, Kohlefaser-verstärkter Kohlenstoff (CFC) und Wolfram. Wolfram ist insbesondere für die Bereiche der ersten Wand sehr gut geeignet, wo relativ niedrige Plasmatempereturen und hohe Partikeldichten vorherrschen. Wolfram hat sehr gute thermische Eigenschaften, wie z.B. eine hohe Wärmeleitfähigkeit (165 W/mK bei Raumtemperatur). Weiters prädestinieren sein hoher Schmelzpunkt, geringes Tritiumaufnahmevermögen, niedrige Vakuumausgasrate und niedrige Sputterrate Wolfram für PFC's. Um eine wirkungsvolle Wärmeabfuhr speziell in den Bereichen höchster Energiedichten zu erreichen, sind PFC's aktiv zu kühlen. Dies kann durch Kühlmittel durchflossene Kupferkomponenten erfolgen, die als Wärmesenke mit der Wolframkomponente verbunden werden. Um eine ausreichend hohe mechanische Festigkeit und Steifigkeit zu gewährleisten ist es vorteilhaft, die Kupfer-Wärmesenke mit einem metallischen Strukturwerkstoff mit höherer Festigkeit zu fügen. Speziell austenitische Stähle und teilchenverstärkte Kupferlegierungen, wie beispielsweise ausscheidungsgehärtete Cr-Zr legierte Kupferlegierungen (Cu-Cr-Zr) oder ODS-(oxide-dispersion-strenpgthened)-Cu Werkstoffe (z.B. Cu-Al₂O₃, Cu-ZrO₂, Cu-Y₂O₃, Cu-Selten-Erd-Oxid) sind für diese Verstärkungselemente geeignet. Für PFC's im Bereich hoher Energiedichten werden zwei Designvananten verfolgt. Bei sogenannten Flachziegeln sind die Übergangsbereiche zwischen den einzelnen Werkstoffen annähernd ebenmäßig ausgeführt. Bei Monoblock-Bauteilen wird eine ausreichende Strukturfestigkeit und -steifigkeit durch das Kühlmitteldurchflossene Rohr erreicht, das beispielsweise aus einer ausscheidungsgehärteten Kupferlegierung oder ODS-Cu besteht. Nach außen hin ist die weitere Werkstofffolge vergleichbar mit der der Flachziegelvariante. Der Wolframbereich ist dabei quaderförmig ausgeführt und umgibt das Kühlrohr, wobei sich zwischen dem Kühlrohr und dem Wolframbereich eine Zwischenlage aus einem weichen und duktilen Werkstoff, vorzugsweise Rein-Kupfer mit geringem Sauerstoffgehalt (OFHC-Kupfer) befindet.

Eine besondere Schwierigkeit bei der Herstellung von Verbundbauteilen für Fusionsreaktoren, wie beispielsweise Flachziegel- oder Monoblockkomponenten, liegt darin, dass Wolfram und Kupfer ein sehr unterschiedliches Wärmeausdehnungsverhalten aufweisen. So liegt der Wärmeausdehnungskoeffizient bei Raumtemperatur von Wolfram bei 4,5 x 10⁻⁶ K⁻¹, der von Kupfer bei 16,6 x 10⁻⁶ K⁻¹.

Für das Verbinden zwischen Wolfram und Kupfer sind Technologien wie beispielsweise Löten, Diffusionsschweißen oder Hintergießen beschrieben. Das Diffusionsschweißen kann dabei mittels heißisostatischem Pressen (HIP) erfolgen, wie dies in der EP 1 025 938 beschrieben ist. Die zuvor genannten Prozesse werden in einem Temperaturbereich zwischen ca. 700 und 1.300°C durchgeführt.
Beim Abkühlen kommt es aufgrund des unterschiedlichen Wärmeausdehnungskoeffizienten von Wolfram und Kupfer zu einem Spannungseinbau im Bereich der Fügezone. Spannungen werden jedoch auch beim Einsatz der PFC's induziert, da diese einer zyklischen Wärmebelastung ausgesetzt sind. Diese Spannungen können zu Rissen bzw. zu Albösungen zwischen Wolfram und Kupfer führen. Durch die dadurch behinderte Wärmeableitung besteht die Gefahr, dass der Verbundbauteil aufschmilzt. Es wurden umfangreiche Entwicklungsprogramme initiiert und teilweise bereits durchgeführt, mit dem Ziel ein Verbundbauteil, bestehend aus einem dem Plasma zugewandten Wolframbereich und einer damit formschlüssig verbundenen, aktiv-gekühlten Wärmesenke aus Kupfer mit geringen Verbundspannungen in der Fügezone zu realisieren.

So wurde eine deutliche Verringerung der Spannungen dadurch erreicht, dass der Wolframbereich in Form von einzelnen kleinen Quadern oder Rundstäben mit einer Seitenlänge bzw. einem Durchmesser von einigen Millimetern ausgeführt wird, wobei diese Quader bzw. Rundstäbe in einem Kupferbereich eingefügt sind. Diese Segmentierung reduziert die thermischen Spannungen, die aus dem Fügeprozess bzw. dem zyklierenden Betrieb resultieren. Jedoch auch bei dieser Ausführung liegt ein hohes Gefahrenpotential in der Ausbildung von thermischen Ermüdungsrissen im Interface Wolfram-Kupfer.

Es gibt zahlreiche Versuche, Spannungen im Interface durch einen gradiert ausgeführten Übergang zwischen Wolfram und Kupfer zu reduzieren.

So beschreibt die US 5 126 106 eine Methode zur Herstellung eines woifram-Kupfer-FGM's (functionally graded material). Dabei wird ein Wolframteil mit gradiert aufgebauter Porosität, beispielsweise durch Plasmaspritzen hergestellt, mit Kupfer infiltriert.

Auch in der US 5 988 488 ist ein Herstellungsverfahren dargestellt, wo mittels Plasmaspritzen ein gradierter Übergang zwischen Wolfram und Kupfer erreicht werden soll. Unterschiedlich zu der US 5 126 106 wird dabei auch die Kupferphase mittels Plasmaspritzen abgeschieden, wobei die jeweils zugeführte Pulvermischung entsprechende Wolfram- und Kupfer- Anteile enthält. Zwischen Wolfram und dem FGM befindet sich ein dünner metallischer Film, der die Adhäsion fördern soll.
In der US 5 988 488 wird weiters ausgeführt, dass versuchsweise eine Schicht aus einem gemischten Kupfer-Wolfram-Material mittels Löten oder Diffusionsbonden zwischen Wolfram und der Kupfer-Wärmesenke eingebracht wurde, wobei jedoch der Unterschied im Wärmeausdehnungskoeffizienten zu hoch war. Weitere detailliertere Ausführungen gehen aus dieser Schrift nicht hervor.

Es ist davon auszugehen, dass sowohl die in der US 5 126 106 und der US 5 988 488 beschriebenen Herstellverfahren zu Verbundbauteilen führen, die eine deutlich verbesserte Beständigkeit gegen thermisch induzierte Risse aufweisen. Nachteilig ist jedoch, dass die darin beschriebenen Verfahrenstechniken aufwendig und damit die so hergestellten Verbundbauteile teuer sind. Zudem beschränken sich aus verfahrenstechnischen Gründen die oben genannten Techniken auf Flachziegelstrukturen; eine Übertragung auf Monoblockgeometrien ist im Allgemeinen aus geometrischen Gründen nicht möglich.

Ein termisch hochbelastbares Verbundbaubeil für Fusionsreaktoren ist in JP-A-0 525 6968 dargestellt.

Es ist Aufgabe der gegenständlichen Erfindung, Verbundbauteile für Fusionsreaktoren bereitzustellen, die zumindest abschnittsweise aus Wolfram bzw. einer Wolframlegierung und Kupfer bzw. einer Kupferlegierung bestehen, die eine ausreichende Funktionsfähigkeit, speziell im Hinblick auf thermische Ermüdung aufweisen, eine kostengünstige Herstellung ermöglichen und auch für Monoblockgeometrien geeignet sind.

Diese Aufgabe wird dadurch gelöst, dass der Refraktärmetall-Kupfer-Verbundwerkstoff über die Dicke d mit 0,1 < d < 4 mm einen makroskopisch gleichmäßigen Kupfer- und Wolfram-Konzentrationsverlauf und einen Refraktärmetallanteil x von 60 Vol.% < x < 90 Vol.% aufweist, wobei die Refraktärmetallphase ein annähernd durchgehendes Skelett bildet.

Refraktärmetall-Kupfer-Bauteile werden großtechnisch als Wärmesenken bzw. Wärmespreizer, beispielsweise für elektronische Packages eingesetzt. Unter Refraktärmetallen versteht man die Elemente der IV^{b} und V^{b} Gruppen des Periodensystems, die einen Schmelzpunkt von größer 1800°C aufweisen.
Konkret sind dies die Metalle Nb, Ta, Cr, Mo und W.
Entgegen der allgemeinen Auffassung, dass die Spannungen in Wolfram-Kupfer Verbundbauteilen für Fusionsreaktoren nur wirkungsvoll durch die Verwendung von FGM's reduziert werden können, zeigten Versuche überraschenderweise, dass dies auch durch Verwendung von Zwischenlagen aus Refraktärmetall-Kupfer-Verbundwerkstoffen mit einem makroskopisch gleichmäßigen Kupfer- und Refraktärmetall-Konzentrationsverlauf möglich ist. Unter makroskopisch gleichmäßigem Konzentrationsverlauf ist dabei der Konzentrationsverlauf über die Dicke des Refraktärmetall-Kupfer-Verbundwerkstoffes ohne Berücksichtigung mikroskopischer Konzentrationsunterschiede zu verstehen. Mikroskopische Konzentrationsunterschiede treten bei Refraktärmetall-Kupfer-Verbundwerkstoffen immer auf, da Refraktärmetalle und Kupfer nicht bzw. nur geringfügig ineinander löslich sind. Es liegen daher Kupfer- und Refraktärmetallphasenbereiche, die üblicherweise eine Größe von 5 bis 50 µm aufweisen, nebeneinander vor.

Ein wirkungsvoller Abbau der Spannungen im Grenzflächenbereich ist nur dann möglich, wenn der Bereich aus einem Refraktärmetall-Kupfer-Verbundwerkstoff zumindest eine Dicke von 0,1 mm aufweist. Bei geringerer Dicke ist die Reduzierung des Spannungsniveaus in einem nicht ausreichenden Maße gegeben. Eine Dicke von größer als 4 mm beeinträchtigt zwar die Funktionsfähigkeit des Verbundbauteiles im Hinblick auf Ablösungen und thermisch induzierte Ermüdungsrisse nicht. Es wird jedoch auf Grund der schlechteren Wärmeleitfähigkeit des Refraktärmetall-Kupfer-Verbundwerkstoffes im Vergleich zu Rein-Kupfer die Wärmeableitung derart verschlechtert, dass eine ausreichende Funktionssicherheit des Verbundbauteiles nicht mehr gegeben ist.

Eine weitere Voraussetzung für eine ausreichende Funktionsfähigkeit besteht darin, dass der Refraktärmetallanteil im Refraktärmetall-Kupfer-Verbundwerkstoff zwischen 60 und 90 Vol.% liegt. Sowohl bei einem niedrigeren als auch bei einem höheren Refraktärmetallanteil ist die Prozesssicherheit nicht mehr in einem ausreichenden Maße sichergestellt. Zudem ist es erforderlich, dass die Herstellung des Refraktärmetall-Kupfer-Verbundwerkstoffes so erfolgt, dass die Refraktärmetallphasenbereiche ein annähernd durchgehendes Skelett bilden.
Dies ist dann gegeben, wenn die Herstellung des Refraktärmetall-Kupfer-Verbundwerkstoffes auf pulvermetallurgischen Weg erfolgt. Dies kann beispielsweise durch Infiltration eines porösen Refraktärmetallkörpers mit Kupfer erfolgen. Der poröse Refraktärmetallkörper kann dabei im gepressten oder gesinterten Zustand vorliegen. Auch durch Pressen von Pulvermischungen oder Kompositpulvern und Sintern lassen sich Refraktärmetall-Kupfer-Verbundwerkstoffe mit annähernd durchgehendem Skelett der Refraktärmetallphase herstellen. Neben der Verwendung von so hergestellten W-Cu und Mo-Cu Verbundwerkstoffen hat sich auch die Verwendung gewalzter oder stranggepresster Mo-Cu-Verbundwerkstoffe als besonders vorteilhaft gezeigt. Des weiteren ist es erforderlich, dass der Bereich aus Kupfer oder einer Kupferlegierung die thermisch induzierten Spannungen in ausreichendem Maße abbauen kann. Zum einen kommen auf Grund des Auswahlkriteriums "Wärmeleitfähigkeit> 250 W/mK" nur Kupferwerkstoffe mit einem geringen Gehalt an Legierungselementen und damit einer geringen Streckgrenze in Frage. Für einen wirkungsvollen Spannungsabbau muss weiters der Bereich aus Kupfer oder einer Kupferlegierung eine mittlere Korngröße von größer 100 µm aufweisen. Als sehr vorteilhaft hat sich dabei erwiesen, wenn der Bereich aus Kupfer oder einer Kupferlegierung unter Verwendung von OFHC (oxygen-free-high-conductivity) Kupfer durch Aufschmelzen mit dem Refraktärmetall-Kupfer-Verbundwerkstoff gefügt wird. Bei diesem Prozess ist gewährleistet, dass die mittlere Korngröße im Bereich des Kupfers / der Kupferlegierung immer über 100 µm liegt. Im selben Prozessschritt kann auch das Fügen des Wolfram- / Wolframlegierungsbereiches mit dem Refraktärmetall-Kupfer-Verbundwerkstoffbereich durch Aufschmelzen der Kupferphase erfolgen. Als vorteilhaft hat es sich erwiesen, wenn zwischen Wolfram und dem Refraktärmetall-Kupfer-Verbundwerkstoff eine Kupferfolie / - blech mit einer Dicke von 0,005 bis 0,5 mm eingebracht wird. Um die Benetzung zwischen Wolfram und Kupfer zu verbessern, ist es weiters vorteilhaft, ein metallisches Element oder eine Legierung, beispielsweise durch Beschichten des Wolframbereiches einzubringen, das sowohl in Wolfram als auch in Kupfer löslich ist oder mit diesen Werkstoffen eine Reaktion eingeht. Dazu eigenen sich Elemente / Legierungen der Eisenmetalle, wie beispielsweise Nickel.

Als geeignete Wolfram-Werkstoffe für den dem Plasma zugewandten Bereich sind einkristallines Wolfram, Rein-Wolfram, AKS-(Aluminium-Kaliumsilikat gedoptes) W, UHP (ultra-high-purity)-Wolfram, nanokristallines Wolfram, amorphes Wolfram, ODS (oxide-dispersion-strengthened)-Wolfram, W-Re, ODS-W-Re und Karbid-, Nitrid- oder Borid-ausscheidungsgehärtete Wolframlegierungen mit einem Karbid-, Nitrid- und/oder Boridanteil bevorzugt zwischen 0,05 und 1 Vol.% zu nennen. Eine segmentierte Ausführung der Wolfram- / Wolframlegierungsbereiche ist vorteilhaft. Da die Rissfortschrittsgeschwindigkeit in Verformungsrichtung der Wolframteile deutlich höher als in Querrichtung ist, kann es sich bei extrem hoch beanspruchten Bauteilen als günstig erweisen, wenn die Wolframteile so gefertigt werden, dass die Verformungsrichtung senkrecht zur der dem Plasma zugeneigten Oberfläche verläuft.

Um eine ausreichende Strukturfestigkeit und -steifigkeit zu erreichen, wird an den Kupferbereich eine Komponente aus einem metallischen Werkstoff mit einer Festigkeit von größer 300 MPa gefügt. Als besonders vorteilhafte metallische Werkstoffe sind ausscheidungsgehärtete Cu-Cr-Zr, ODS-Cu Werkstoffe und austenitische Stähle zu nennen. Die Auswahl der geeignetesten Fügetechnik hängt von der Art der Werkstoffpaarung ab. Kupfer / Kupfer bzw. Kupfer / Stahl Paarungen werden vorteilhafterweise durch Hartlöten, oder Diffusionsbonden wie beispielsweise das Heiß-Isostatische Pressen verbunden. Für Kupfer / Kupfer Paarungen eignen sich darüber hinaus noch Schmelzschweißverfahren wie das hochenergetische Elektronenstrahlschweißen.
Die Herstellung der Verbundbauteile in Flachziegel- und Monoblockausführung ist in den nachfolgenden Beispielen dargestellt.
Zur Veranschaulichung dienen Fig. 1 bis Fig. 5.
- Fig. 1: zeigt eine als Flachziegel ausgeführte Divertorkomponente, gemäß Beispiel 1,
- Fig. 2: im Querschnitt die Werkstoffabfolge, gemäß Beispiel 1 und 2,
- Fig. 3: das mechanisch bearbeitete Zwischenprodukt nach dem Hintergießvorgang, gemäß Beispiel 1,
- Fig. 4: eine als Monoblock ausgeführte Divertorkomponente, gemäß Beispiel 2 und
- Fig. 5: eine als Monoblock ausgeführte Divertorkomponente gemäß Beispiel 2 vor dem Fügen mit dem Cu-Cr-Zr Rohr.

### Beispiel 1:

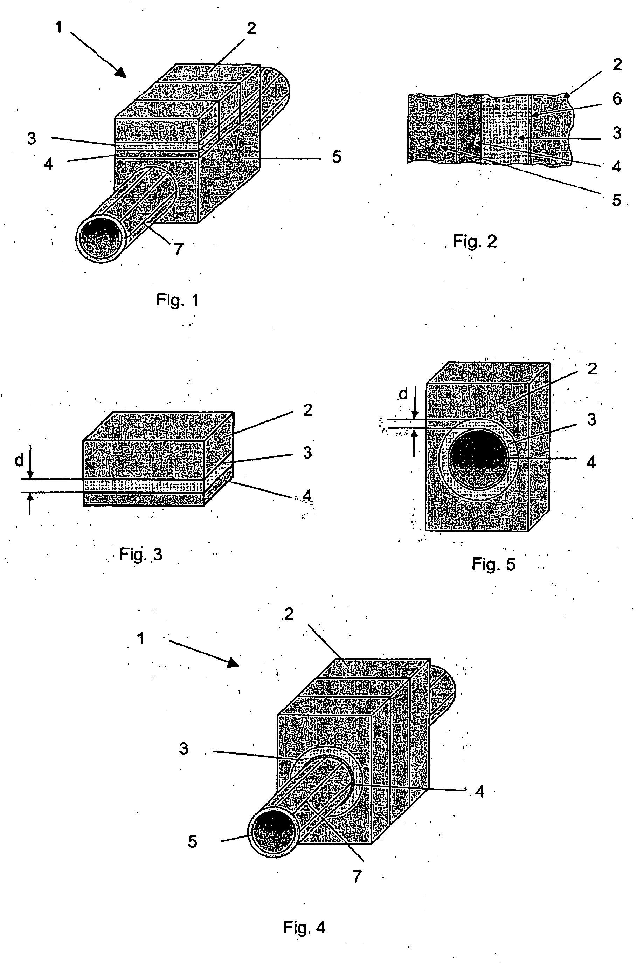

Eine Divertorplatte -1- für Fusionsreaktoren wurde als Flachziegel ausgeführt (siehe Fig.1). Dazu wurden Wolframziegel -2- mit der Dimension 20 x 40 x 6,5 mm aus einem Wolframstab mit einem Durchmesser von 60 mm geschnitten. Die Ziegel wurde dabei derart aus dem Stab geschnitten, dass die Ziegelhöhe (6,5 mm) parallel zur Stabachse liegt. Damit liegt die Kornorientierung in Richtung der späteren Hauptwärmeflussrichtung. Weiters wurde aus einer Platte aus einem Wolfram-Kupfer-Verbundwerkstoff mit einem Kupfergehalt von 15 Gew.% (Bezeichnung T750) ein Zwischenziegel -3- mit einer Dicke d von 2 mm, einer Breite von 20 mm und einer Länge von 40 mm herausgearbeitet.

In einer entsprechenden Gießvorrichtung wurden ein Wolframziegel -2-, eine 0,10 mm dicke OFHC Kupferfolie -6-, der T750 Zwischenziegel -3- sowie ein OFHC-Kupfer Block -4- mit der Dimension 20 x 40x 10 mm gestapelt. Das darauffolgende Hintergießen des Stapels durch das OFHC Kupfer wurde in einem Schutzgasofen unter Wasserstoffatmosphäre bei einer Temperatur von 1250°C durchgeführt. Die Temperatur wurde 30 min. lang gehalten, was eine ausreichende Benetzung des flüssigen Kupfers mit allen festen Komponenten des Aufbaus gewährleistet.

Nach dem Ausbau des hintergossenen Stapels aus der Hinteraießvorrichtung wurde der Stapel umseitig überarbeitet. Dabei wurde das hintergossene Kupfer bis auf eine Reststärke von 2 mm abgearbeitet (siehe Fig. 3). Um unerwünschte Kupferbenetzungen zu entfernen wurden die übrigen Flächen des Stapels noch umseitig überarbeitet.
Die anschließende Ultraschallprüfung und der von einer Parallelprobe entnommene metallographische Schliff durch die Verbindungszone zeigten, dass es während der Abkühlphase nach dem Unterschreiten der Kupferschmelztemperatur zu einer stoffschlüssigen Verbindung im gesamten Stapel kam.
Die mit dem nach dem oben beschriebenen Hintergießverfahren hergestellten Verbundziegel wurden mittels dem in der EP 1 025.938 beschriebenen HIP-Verfahren mit einer Cu-Cr-Zr Wärmesenke -5- verbunden, in welche die Kühlstruktur -7- nach dem Ausbau aus der HIP-Kanne mechanisch eingearbeitet wurde. Die Werkstoffabfolge der Komponente ist in Fig. 2 schematisch wiedergegeben.

### Beispiel 2:

In ähnlicher Weise wurde die Fig. 4 gezeigte Divertorplatte -1- nach dem Monoblock-Design gefertigt.
Dazu wurde in einen 30 x 20 x 10 mm großen Wolframblock -2- ein zentrisches Durchgangsloch mit einer Länge von 10 mm und einem Durchmesser von 15,2 mm gebohrt.
Aus einer Platte aus einem Wolfram-Kupfer-Verbundwerkstoff mit einem Kupfer-Gehalt von 20 Gew.% (Bezeichnung T800) wurde ein Ring -3- mit einem Außendurchmesser von 15 mm, einer Wandstärke d von 1 mm und einer Länge von 10 mm gefertigt.
Eine 0,1 mm starke OFHC Kupferfolie, der aus T800 gefertigte Ring -3- und ein 15 mm langer OFHC Kupferstab mit einem Durchmesser von 13 mm wurden entsprechend der Werkstoffabfolge von Fig. 2 in die Durchgangsbohrung des Wolframblockes eingelegt. Das anschließende Hintergießen der Ziegelbohrung durch das OFHC-Kupfer wurde im Schutzgasofen unter Wasserstoff bei 1250°C / 30 min. durchgeführt. Nach dem Ausbau des hintergossenen Monoblocks wurde eine zur Wolframbohrung konzentrische Bohrung mit einem Durchmesser von 12 mm in das hintergossene Kupfer eingebracht. Nach dieser Bearbeitung wies der Verbundblock eine 0,50 mm starke OFHC-Kupferschicht - 4- in der Bohrung auf (siehe Fig. 5); So hergestellte Teile wurden gemäß dem in der EP 1 025 938 beschriebenen Verfahren mit einem CuCrZr-Rohr-5- mit einem Außendurchmesser von 12 mm mittels HIP verbunden, in welches die Kühlstruktur -7- nach dem Ausbau aus der HIP-Kanne mechanisch eingearbeitet wurde. Die anschließende Ultraschallprüfung und metallographische Untersuchung zeigten eine einwandfreie Qualität der Verbindungen des derart erhaltenen Verbundkörpers.

## Patentansprüche

1. Thermisch hochbelastbares Verbundbauteil (1) für einen Fusionsreaktor, das zumindest aus einem dem Plasma zugewandten Bereich (2) aus Wolfram oder einer Wolframlegierung mit einem W-Gehalt > 90 Gew.%, einem zur Wärmeableitung dienenden Bereich (4) aus Kupfer oder einer Kupferlegierung mit einer Wärmeleitfähigkeit > 250 W/mK und einem dazwischenliegenden Bereich (3) aus einem Refraktärmetall-Kupfer-Verbundwerkstoff besteht, wobei der Refraktärmetall-Kupfer-Verbundwerkstoff über die Dicke d mit 0,1 < d < 4 mm einen makroskopisch gleichmäßigen Kupfer- und Refraktärmetall-Konzentrationsverlauf und einen Refraktärmetallanteil x von 60 Vol.% < x < 90 Vol.% aufweist, und die Refraktärmetallphase ein annähernd durchgehendes Skelett bildet,
**dadurch gekennzeichnet,**
**dass** die mittlere Korngröße des Kupfers oder der Kupflegierung im zur Wärmeableitung dienenden Bereich (4) von > 100 µm ist.

2. Thermisch hochbelastbäres Verbundbauteil (1) für einen Fusionsreaktor nach Anspruch 1, **dadurch gekennzeichnet, dass** an den Bereich (4) aus Kupfer oder einer Kupferlegierung eine Komponente (5) aus einem metallischen Werkstoff mit einer Festigkeit bei Raumtemperatur von > 300 MPa gefügt ist.

3. Thermisch hochbelastbares Verbundbauteil (1) für einen Fusionsreaktor nach Anspruch 2, **dadurch gekennzeichnet, dass** die Komponente (5) aus einer Cu-Cr-Zr-Legierung besteht.

4. Thermisch hochbelastbares Verbundbauteil (1) für einen Fusionsreaktor nach Anspruch 2, **dadurch gekennzeichnet, dass** die Komponente (5) aus einem austenitischen Stahl besteht.

5. Thermisch hochbelastbares Verbundbauteil (1) für einen Fusionsreaktor nach einem der Ansprüche 1 bis 4, **dadurch gekennzeichnet, dass** der Bereich (3) aus einem pulvermetallurgisch hergestellten Refraktärmetall-Kupfer-Verbundwerkstoff besteht.

6. Thermisch hochbelastbares Verbundbauteil (1) für einen Fusionsreaktor nach Anspruch 5, **dadurch gekennzeichnet, dass** der Refraktärmetall-Kupfer-Verbundwerkstoff aus Wolfram mit 10 bis 40 Vol.% Kupfer besteht.

7. Thermisch hochbelastbares Verbundbauteil (1) für einen Fusionsreaktor nach Anspruch 5, **dadurch gekennzeichnet, dass** der Refraktärmetall-Verbundwerkstoff aus Molybdän mit 10 bis 40 Vol.% Kupfer besteht.

8. Thermisch hochbelastbares Verbundbauteil (1) für einen Fusionsreaktor nach einem der Ansprüche 1 bis 7, **dadurch gekennzeichnet, dass** der dem Plasma zugewandte Bereich (2) aus Wolfram oder einer Wolframlegierung segmentiert ausgeführt ist.

9. Thermisch hochbelastbares Verbundbauteil (1) für einen Fusionsreaktor nach einem der Ansprüche 1 bis 8, **dadurch gekennzeichnet, dass** dieser als Flachziegel ausgeführt ist.

10. Thermisch hochbelastbares Verbundbauteil (1) für einen Fusionsreaktor nach einem der Ansprüche 1 bis 8, **dadurch gekennzeichnet, dass** dieser als Monoblock ausgeführt ist.

11. Herstellung eines thermisch hochbelasteten Verbundbauteiles (1) nach Anspruch 9, **dadurch gekennzeichnet,**
**dass** in einer geeigneten temperatur- und korrosionsbeständigen Form, beispielsweise aus Graphit, unter Vakuum oder einem nicht oxidierenden Schutzgas ein oder mehrere Formteile (2) aus Wolfram oder einer Wolframlegierung mit einem oder mehreren Formteilen (3) aus einem Refraktärmetall-Kupfer-Verbundwerkstoff, die plattenförmig ausgeführt sind, und diese wiederum mit einem Bereich (4) aus Kupfer oder einer Kupferlegierung durch Aufschmelzen der kupferhaltigen Bestandteile und anschließendem Abkühlen auf Raumtemperatur gefügt werden,
und das so hergestellte Bauteil nach einer mechanischen Bearbeitung mit einer Metallkomponente (5), welche eine Festigkeit von > 300 MPa aufweist, formschlüssig durch einen Schweiß-, Löt-, Diffusions- oder Plattiervorgang verbunden wird.

12. Herstellung eines thermisch hochbelasteten Verbundbauteiles (1) nach Anspruch 10, **dadurch gekennzeichnet, dass** in einer geeigneten temperatur- und korrosionsbeständigen Form, beispielsweise aus Graphit, unter Vakuum oder einem nicht oxidierenden Schutzgas ein oder mehrere mit einer Bohrung versehene Formteile (2) aus Wolfram oder einer Wolframlegierung mit einem oder mehreren Formteilen (3) aus einem Refraktärmetall-Kupfer-Verbundwerkstoff, die ringförmig ausgeführt sind, und diese wiederum mit einem Bereich (4) aus Kupfer oder einer Kupferlegierung durch Aufschmelzen der kupferhaltigen Bestandteile und anschließendem Abkühlen auf Raumtemperatur gefügt werden,
und das so hergestellte Bauteil nach einer mechanischen Bearbeitung mit einer Metallkomponente (5), welche eine Festigkeit von > 300 MPa aufweist, formschlüssig durch einen Schweiß-, Löt-, Diffusions- oder Plattiervorgang verbunden wird.

13. Herstellung eines Verbundbauteiles (1) nach Anspruch 11 oder 12, **dadurch gekennzeichnet,**
**dass** zwischen dem Formteil (2) aus Wolfram oder einer Wolframlegierung und dem Formteil (3) aus einem Refraktärmetall-Kupfer-Verbundwerkstoff eine
Folie / Blech (6) aus Kupfer oder einer Kupferlegierung mit einer Dicke von 0,005 bis 0,5 mm eingebracht wird.

14. Herstellung eines Verbundbauteiles nach einem der Ansprüche 11 bis 13, **dadurch gekennzeichnet, dass** eine Schicht aus einem Element / Legierung der Eisenmetalle, bevorzugt Nickel, auf der Fügefläche des Formteils (2) aus Wolfram oder einer Wolframlegierung, des Formteils (3) aus einem Refraktärmetall-Kupfer-Verbundwerkstoff und / oder der Folie / Blech (6) aus Kupfer oder einer Kupferlegierung aufgebracht wird.

## Claims

1. A thermally highly loadable composite structural member (1) for a fusion reactor, which consists at least of a region (2) facing towards the plasma, made of tungsten or a tungsten alloy with a W content > 90 wt.%, a region (4) serving for the dissipation of heat, made of copper or a copper alloy with a thermal conductivity > 250 W/mK, and an intermediate region (3) made of a refractory-metal/copper composite material, the refractory-metal/copper composite material exhibiting a macroscopically uniform copper and refractory-metal concentration characteristic and a proportion x of refractory metal, where 60 vol.% < x < 90 vol.%, over the thickness d, where 0.1 mm < d < 4 mm, and the refractory-metal phase forming an approximately continuous skeleton,
**characterised**
**in that** the mean grain size of the copper or copper alloy in the region (4) serving for the dissipation of heat is > 100 µm.

2. Thermally highly loadable composite structural member (1) for a fusion reactor, according to Claim 1, **characterised in that** a component (5) made of a metallic material having a strength of > 300 MPa at room temperature is joined onto the region (4) made of copper or a copper alloy.

3. Thermally highly loadable composite structural member (1) for a fusion reactor, according to Claim 2, **characterised in that** the component (5) consists of a Cu-Cr-Zr alloy.

4. Thermally highly loadable composite structural member (1) for a fusion reactor, according to Claim 2, **characterised in that** the component (5) consists of an austenitic steel.

5. Thermally highly loadable composite structural member (1) for a fusion reactor, according to one of Claims 1 to 4, **characterised in that** the region (3) consists of a refractory-metal/copper composite material produced by a powder-metallurgical process.

6. Thermally highly loadable composite structural member (1) for a fusion reactor, according to Claim 5, **characterised in that** the refractory-metal/copper composite material consists of tungsten with 10 vol.% to 40 vol.% copper.

7. Thermally highly loadable composite structural member (1) for a fusion reactor, according to Claim 5, **characterised in that** the refractory-metal composite material consists of molybdenum with 10 vol.% to 40 vol.% copper.

8. Thermally highly loadable composite structural member (1) for a fusion reactor, according to one of Claims 1 to 7, **characterised in that** the region (2) facing towards the plasma, made of tungsten or a tungsten alloy, is of segmented structure.

9. Thermally highly loadable composite structural member (1) for a fusion reactor, according to one of Claims 1 to 8, **characterised in that** the latter is constructed in the form of a flat tile.

10. Thermally highly loadable composite structural member (1) for a fusion reactor, according to one of Claims 1 to 8, **characterised in that** the latter is constructed in the form of a monoblock.

11. Production of a thermally highly loaded composite structural member (1) according to Claim 9,
**characterised**
**in that** in a suitable temperature-loadable and corrosion-loadable mould, made of graphite for example, under vacuum or a non-oxidising shielding gas, one or more mouldings (2) made of tungsten or a tungsten alloy are joined with one or more mouldings (3) made of a refractory-metal/copper composite material, which are of plate-like construction, and these are in turn joined with a region (4) made of copper or a copper alloy by fusing the copper-containing constituents and by subsequent cooling to room temperature,
and after a machining process the structural member produced in such a way is positively connected to a metal component (5) that exhibits a strength of > 300 MPa by means of a welding, soldering, diffusion or plating operation.

12. Production of a thermally highly loaded composite structural member (1) according to Claim 10, **characterised in that** in a suitable temperature-loadable and corrosion-loadable mould, made of graphite for example, under vacuum or a non-oxidising shielding gas, one or more mouldings (2) made of tungsten or a tungsten alloy and provided with a bore are joined with one or more mouldings (3) made of a refractory-metal/copper composite material which are of annular construction, and these are in turn joined with a region (4) made of copper or a copper alloy by fusing the copper-containing constituents and by subsequent cooling to room temperature,
and after a machining process the structural member produced in such a way is positively connected to a metal component (5) that exhibits a strength of > 300 MPa by means of a welding, soldering, diffusion or plating operation.

13. Production of a composite structural member (1) according to Claim 11 or 12, **characterised in that** a foil/sheet (6) made of copper or a copper alloy with a thickness of 0.005 mm to 0.5 mm is inserted between the moulding (2) made of tungsten or a tungsten alloy and the moulding (3) made of a refractory-metal/copper composite material.

14. Production of a composite structural member according to one of Claims 11 to 13, **characterised in that** a layer consisting of an element/alloy pertaining to the ferrous metals, preferably nickel, is applied on the surface to be joined of the moulding (2) made of tungsten or a tungsten alloy, of the moulding (3) made of a refractory-metal/copper composite material, and/or of the foil/sheet (6) made of copper or a copper alloy.

## Revendications

1. Pièce composite à haute résistance thermique (1) pour réacteurs de fusion constituée au moins d'un secteur face au plasma (2) réalisé en tungstène ou un alliage dont la part de tungstène est supérieure à 90% en poids, d'un secteur de dissipation thermique (4) en cuivre ou un alliage de cuivre dont la conductibilité thermique est supérieure à 250 W/mK, et d'un secteur intermédiaire (3) réalisé en un matériau composite de métal réfractaire et de cuivre, dans laquelle le matériau composite de métal réfractaire et de cuivre présente, sur l'épaisseur d comprise entre 0,1 et 4 mm, une courbe de concentration en cuivre et en métal réfractaire macroscopiquement régulière, ainsi qu'une part de métal réfractaire x comprise entre 60% et 90% volumétrique, et dans laquelle la phase de métal réfractaire constitue un squelette approximativement continu, **caractérisée en ce que** la grosseur de grain moyenne du cuivre ou de l'alliage de cuivre dans le secteur de dissipation thermique (4) est supérieure à 100 µm.

2. Pièce composite à haute résistance thermique (1) pour réacteurs de fusion selon la revendication 1, **caractérisée en ce qu'**il est joint au secteur (4) en cuivre ou un alliage de cuivre, un composant (5) en un matériau métallique dont la résistance, à température ambiante, est supérieure à 300 MPa.

3. Pièce composite à haute résistance thermique (1) pour réacteurs de fusion selon la revendication 2, **caractérisée en ce que** le composant (5) est réalisé en un alliage de Cu-Cr-Zr.

4. Pièce composite à haute résistance thermique (1) pour réacteurs de fusion selon la revendication 2, **caractérisée en ce que** le composant (5) est réalisé en un acier austénitique.

5. Pièce composite à haute résistance thermique (1) pour réacteurs de fusion selon l'une quelconque des revendications 1 à 4, **caractérisée en ce que** le secteur (3) est réalisé en un matériau composite de métal réfractaire et de cuivre fabriqué selon une technique de métallurgie des poudres.

6. Pièce composite à haute résistance thermique (1) pour réacteurs de fusion selon la revendication 5, **caractérisée en ce que** ledit matériau composite est en tungstène avec une part de cuivre comprise entre 10 et 40% volumétrique.

7. Pièce composite à haute résistance thermique (1) pour réacteurs de fusion selon la revendication 5, **caractérisée en ce que** ledit matériau composite est en molybdène avec une part de cuivre comprise entre 10 et 40% volumétrique.

8. Pièce composite à haute résistance thermique (1) pour réacteurs de fusion selon l'une quelconque des revendications 1 à 7, **caractérisée en ce que** le secteur (2) face au plasma est réalisé, par segments, en tungstène ou un alliage de tungstène.

9. Pièce composite à haute résistance thermique (1) pour réacteurs de fusion selon l'une quelconque des revendications 1 à 8, **caractérisée en ce que** ladite pièce composite est réalisée en forme de tuile plate.

10. Pièce composite à haute résistance thermique (1) pour réacteurs de fusion selon l'une quelconque des revendications 1 à 8, **caractérisée en ce que** ladite pièce composite est réalisée en monobloc.

11. Fabrication d'une pièce composite à haute résistance thermique (1) selon la revendication 9, **caractérisée**
- **en ce que**, dans un moule approprié, par exemple en graphite, résistant à la chaleur et à la corrosion, il est procédé à l'assemblage sous vide ou sous un gaz protecteur non oxydant, d'une ou de plusieurs pièces moulées (2) en tungstène ou un alliage de tungstène, avec une ou plusieurs pièces moulées (3) en un matériau composite de métal réfractaire et de cuivre, ces pièces moulées étant en forme de plaque,
- **en ce que** lesdites pièces moulées sont à leur tour jointes à un secteur (4) en cuivre ou un alliage de cuivre, par fusion des composants à teneur en cuivre, puis du refroidissement de ces derniers jusqu'à la température ambiante
- et **en ce que**, après usinage, la pièce ainsi fabriquée est reliée, par coopération de forme réalisée par soudage, brasage, diffusion ou placage, à un composant métallique (5) dont la résistance est supérieure à 300 MPa.

12. Fabrication d'une pièce composite à haute résistance thermique (1) selon la revendication 10, **caractérisée**
- **en ce que**, dans un moule approprié, par exemple en graphite, résistant à la chaleur et à la corrosion, il est procédé à l'assemblage sous vide ou sous un gaz protecteur non oxydant, d'une ou de plusieurs pièces moulées (2), en tungstène ou un alliage de tungstène et comprenant un alésage, avec une ou plusieurs pièces moulées (3) en un matériau composite de métal réfractaire et de cuivre, ces pièces moulées étant en forme d'anneau,
- **en ce que** lesdites pièces moulées sont à leur tour assemblées à un secteur (4) en cuivre ou un alliage de cuivre, par fusion des composants à teneur en cuivre, puis le refroidissement de ces derniers jusqu'à la température ambiante
- et **en ce que**, après usinage, la pièce ainsi fabriquée est assemblée, par coopération de forme réalisée par soudage, brasage, diffusion ou placage, à un composant métallique (5) dont la résistance est supérieure à 300 MPa.

13. Fabrication d'une pièce composite (1) selon la revendication 11 ou 12, **caractérisée en ce qu'**il est intercalé, entre la pièce moulée (2) en tungstène ou un alliage de tungstène et la pièce moulée (3) en un matériau composite de métal réfractaire et de cuivre, une feuille ou tôle (6) en cuivre ou un alliage de cuivre dont l'épaisseur est comprise entre 0,005 et 0,5 mm.

14. Fabrication d'une pièce composite (1) selon l'une quelconque des revendications 11 à 13, **caractérisée en ce qu'**il est appliqué, sur la face d'assemblage respectivement de la pièce moulée (2) en tungstène ou un alliage de tungstène, de la pièce moulée (3) en un matériau composite de métal réfractaire et de cuivre et/ou de la feuille ou tôle (6) en cuivre ou un alliage de cuivre, une couche composée d'un élément ou d'un alliage de métaux ferreux, de préférence de nickel.
